# DEMANDE DE BREVET EUROPEEN

(11) **EP 3 852 060 A1**
(43) Date de publication de la demande: **21.07.2021**
(21) Numéro de dépôt: 21151822.0
(22) Date de dépôt: 15.01.2021
(51) Int. Cl.: G06T 7/00

(54) **PROCÉDÉ D'ANALYSE D'IMAGES PRISES PAR RADIOGRAPHIE ET DISPOSITIFS ASSOCIÉS**

(30) Priorité: 17.01.2020 FR 2000450
(71) Demandeur: Milvue, 75015 Paris (FR)
(72) Inventeur: HUARD, MALO, 75013 PARIS (FR); RIOCHET, RONAN, 75015 PARIS (FR); PARPALEIX, ALEXANDRE, 75015 PARIS (FR)
(74) Mandataire: Lavoix

(57) **Abrégé**

L'invention concerne un procédé d'analyse d'images prises par radiographie d'une partie d'un sujet comportant au moins une zone à étudier avec des os, comportant une étape de :
- détection d'une zone à étudier ainsi que de l'incidence avec laquelle les images sont prises par radiographie,
- localisation d'éléments géométriques remarquables de la zone à étudier par mise en œuvre d'une première technique impliquant la détermination de la position de points remarquables à l'aide d'un réseau de neurones puis la détermination de segments remarquables comme reliant les points déterminés ou d'une deuxième technique impliquant la détermination de droites remarquables à l'aide d'un réseau de neurones puis la détermination des points remarquables comme intersection de droites remarquables déterminées, et
- mesure d'au moins un angle entre deux os de la zone à étudier à partir de la localisation d'éléments géométriques remarquables.

## Description

La présente invention concerne un procédé d'analyse d'images médicales prises par radiographie. La présente invention concerne aussi un produit programme d'ordinateur et un support physique d'informations associés.

La radiologie dans le domaine médical, désigne l'ensemble des modalités diagnostiques et thérapeutiques utilisant les rayons X, ou plus généralement utilisant des rayonnements. La radiologie est mise en œuvre par un radiologue. Les fonctions principales du radiologue sont d'adapter les modalités d'examens à l'indication en fonction des renseignements donnés par le médecin prescripteur, de réaliser ou faire réaliser l'acquisition des images avec l'aide du manipulateur, de réaliser l'interprétation des images, de dicter un compte-rendu qui répond à la question posée par le clinicien et de recevoir le patient pour lui donner le résultat de sa réflexion sur le problème soulevé.

Malgré toutes les compétences des radiologues, des cas de mauvais diagnostics ont eu lieu et ont conduit à des erreurs médicales préjudiciables pour les patients.

Il existe donc un besoin pour un procédé d'analyse d'images prises par radiographie qui soit plus fiable.

A cet effet, la description porte sur un procédé d'analyse d'images prises par radiographie d'une partie d'un sujet comportant au moins une zone à étudier avec des os, le procédé étant mis en œuvre par ordinateur et comportant une étape de détection de l'au moins une zone à étudier ainsi que de l'incidence avec laquelle les images sont imagées, une étape de localisation d'éléments géométriques remarquables de l'au moins une zone à étudier par mise en œuvre d'au moins une technique parmi une première technique et une deuxième technique, la première technique impliquant la détermination de la position de points remarquables à l'aide d'un réseau de neurones puis la détermination de segments remarquables comme reliant les points déterminés, la deuxième technique impliquant la détermination de droites remarquables à l'aide d'un réseau de neurones puis la détermination des points remarquables comme intersection de droites remarquables déterminées, et une étape de mesure d'au moins un angle entre deux os de l'au moins une zone à étudier à partir des éléments géométriques remarquables localisés.

Selon des modes de réalisation particuliers, le procédé d'analyse présente une ou plusieurs des caractéristiques suivantes prises selon toute combinaison techniquement admissible :
- lors de l'étape de localisation d'éléments géométriques remarquables, les deux techniques sont mises en œuvre pour obtenir deux résultats, l'étape de localisation comportant, en outre, une étape d'agrégation des résultats obtenus par les deux techniques, notamment par moyennage, pour obtenir une localisation de chacun des éléments géométriques remarquables.
- l'étape de détection est mise en oeuvre par application d'un réseau de neurones convolutionnel.
- les images sont découpées en ensemble de pixels, le procédé comporte une détection de la probabilité de la présence d'une anomalie pour classer chaque ensemble de pixels selon trois catégories : présence d'une pathologie, doute sur la présence d'une pathologie et absence de pathologie.
- l'étape de détection de probabilité met en oeuvre plusieurs techniques de calcul distinctes impliquant chacune l'emploi d'un réseau de neurones respectif puis d'au moins une étape d'agrégation des résultats obtenus par mise en oeuvre des techniques de calcul.
- le procédé comporte, en outre, une étape de détermination de la qualité de la prise des images par utilisation d'un classifieur.
- le procédé comporte, en outre, une étape de constitution d'un rapport, le rapport comportant la valeur du ou des angles mesuré(s) sur les images
- le procédé comporte, en outre, une étape d'affichage de la valeur du ou des angles mesuré(s) sur les images.

Selon un autre aspect, la description concerne aussi un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'au moins une étape d'un procédé tel que précédemment décrit lorsque le programme d'ordinateur est mis en oeuvre sur l'unité de traitement des données.

La description décrit aussi un support lisible d'informations comportant des instructions de programme formant un programme d'ordinateur, le programme d'ordinateur étant chargeable sur une unité de traitement de données et adapté pour entraîner la mise en oeuvre d'au moins une étape d'un procédé tel que précédemment décrit lorsque le programme d'ordinateur est mis en oeuvre sur l'unité de traitement de données.

L'invention sera mieux comprise et d'autres avantages de celle-ci apparaîtront plus clairement à la lumière de la description qui va suivre, donnée uniquement à titre d'exemple et faite en référence aux dessins annexés, dans lesquels :
- la figure 1 est une représentation schématique d'un système et d'un produit programme d'ordinateur,
- la figure 2 est un exemple d'ordinogramme d'un exemple de mise en œuvre d'un procédé d'analyse,
- la figure 3 est une représentation d'une hanche telle qu'elle pourrait être vue dans une radiographie, et
- la figure 4 est un représentation schématique d'éléments géométriques remarquables dans la représentation de la figure 3.

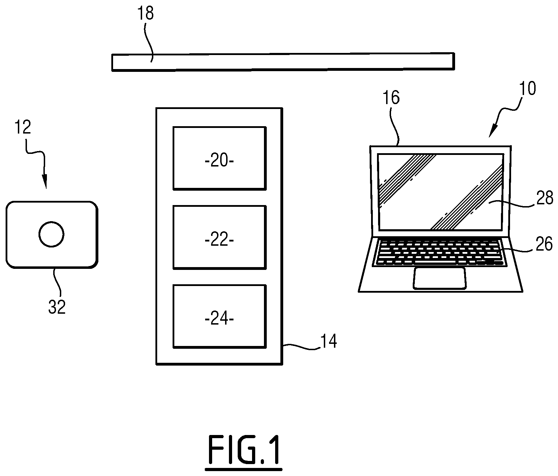

Un système 10 et un produit programme d'ordinateur 12 sont représentés sur la figure 1.

L'interaction entre le système 10 et le produit programme d'ordinateur 12 permet la mise en œuvre d'un procédé d'analyse d'images médicales prises par radiographie (simplement dénommées images dans ce qui suit pour clarifier le propos). Le procédé d'analyse est ainsi un procédé mis en œuvre par ordinateur.

Le système 10 est un ordinateur de bureau. En variante, le système 10 est un ordinateur monté sur un rack, un ordinateur portable, une tablette, un assistant numérique personnel (PDA) ou un smartphone.

Dans des modes de réalisation spécifiques, l'ordinateur est adapté pour fonctionner en temps réel et/ou est dans un système embarqué, notamment dans une machine servant à la réalisation de radiographies médicales, ou un véhicule tel qu'un avion.

Dans le cas de la figure 1, le système 10 comprend un calculateur 14, une interface utilisateur 16 et un dispositif de communication 18.

Le calculateur 14 est un circuit électronique conçu pour manipuler et/ou transformer des données représentées par des quantités électroniques ou physiques dans des registres du système 10 et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le calculateur 14 comprend un processeur monocœur ou multicœurs (tel qu'une unité de traitement centrale (CPU), une unité de traitement graphique (GPU), un microcontrôleur et un processeur de signal numérique (DSP)), un circuit logique programmable (comme un circuit intégré spécifique à une application (ASIC), un réseau de portes programmables *in situ* (FPGA), un dispositif logique programmable (PLD) et des réseaux logiques programmables (PLA)), une machine à états, une porte logique et des composants matériels discrets.

Le calculateur 14 comprend une unité de traitement de données 20 adaptée pour traiter des données, notamment en effectuant des calculs, des mémoires 22 adaptées à stocker des données et un lecteur 24 adapté à lire un support lisible par ordinateur.

L'interface utilisateur 16 comprend un dispositif d'entrée 26 et un dispositif de sortie 28.

Le dispositif d'entrée 26 est un dispositif permettant à l'utilisateur du système 10 de saisir sur le système 10 des informations ou des commandes.

Sur la figure 1, le dispositif d'entrée 26 est un clavier. En variante, le dispositif d'entrée 26 est un périphérique de pointage (tel qu'une souris, un pavé tactile et une tablette graphique), un dispositif de reconnaissance vocale, un oculomètre ou un dispositif haptique (analyse des mouvements de mouvement).

Le dispositif de sortie 28 est une interface utilisateur graphique, c'est-à-dire une unité d'affichage conçue pour fournir des informations à l'utilisateur du système 10.

Sur la figure 1, le dispositif de sortie 28 est un écran d'affichage permettant une présentation visuelle de la sortie. Dans d'autres modes de réalisation, le dispositif de sortie est une imprimante, une unité d'affichage augmenté et/ou virtuel, un haut-parleur ou un autre dispositif générateur de son pour présenter la sortie sous forme sonore, une unité produisant des vibrations et/ou des odeurs ou une unité adaptée à produire un signal électrique.

Dans un mode de réalisation spécifique, le dispositif d'entrée 26 et le dispositif de sortie 28 sont le même composant formant des interfaces homme-machine, tel qu'un écran interactif.

Le dispositif de communication 18 permet une communication unidirectionnelle ou bidirectionnelle entre les composants du système 10. Par exemple, le dispositif de communication 28 est un système de communication par bus ou une interface d'entrée / sortie.

La présence du dispositif de communication 18 permet que, dans certains modes de réalisation, les composants du calculateur 14 soient distants les uns des autres.

Le produit programme informatique 12 comprend un support lisible par ordinateur 32.

Le support lisible par ordinateur 32 est un dispositif tangible lisible par le lecteur 24 de la calculatrice 14.

Notamment, le support lisible par ordinateur 32 n'est pas un signal transitoire en soi, tels que des ondes radio ou d'autres ondes électromagnétiques à propagation libre, telles que des impulsions lumineuses ou des signaux électroniques.

Un tel support de stockage lisible par ordinateur 32 est, par exemple, un dispositif de stockage électronique, un dispositif de stockage magnétique, un dispositif de stockage optique, un dispositif de stockage électromagnétique, un dispositif de stockage à semi-conducteur ou toute combinaison de ceux-ci.

En tant que liste non exhaustive d'exemples plus spécifiques, le support de stockage lisible par ordinateur 32 est un dispositif codé mécaniquement, tel que des cartes perforées ou des structures en relief dans une gorge, une disquette, un disque dur, une mémoire morte (ROM), une mémoire vive (RAM), une mémoire effaçable programmable en lecture seule (EROM), une mémoire effaçable électriquement et lisible (EEPROM), un disque magnéto-optique, une mémoire vive statique (SRAM), un disque compact (CD-ROM), un disque numérique polyvalent (DVD), une clé USB, un disque souple, une mémoire flash, un disque à semi-conducteur (SSD) ou une carte PC telle qu'une carte mémoire PCMCIA.

Un programme d'ordinateur est stocké sur le support de stockage lisible par ordinateur 32. Le programme d'ordinateur comprend une ou plusieurs séquences d'instructions de programme mémorisées.

De telles instructions de programme, lorsqu'elles sont exécutées par l'unité de traitement de données 20, entraînent l'exécution d'étapes du procédé d'analyse.

Par exemple, la forme des instructions de programme est une forme de code source, une forme exécutable par ordinateur ou toute forme intermédiaire entre un code source et une forme exécutable par ordinateur, telle que la forme résultant de la conversion du code source via un interpréteur, un assembleur, un compilateur, un éditeur de liens ou un localisateur. En variante, les instructions de programme sont un microcode, des instructions firmware, des données de définition d'état, des données de configuration pour circuit intégré (par exemple du VHDL) ou un code objet.

Les instructions de programme sont écrites dans n'importe quelle combinaison d'un ou de plusieurs langages, par exemple un langage de programmation orienté objet (FORTRAN, C++, JAVA, HTML), un langage de programmation procédural (langage C par exemple).

Alternativement, les instructions du programme sont téléchargées depuis une source externe via un réseau, comme c'est notamment le cas pour les applications. Dans ce cas, le produit programme d'ordinateur comprend un support de données lisible par ordinateur sur lequel sont stockées les instructions de programme ou un signal de support de données sur lequel sont codées les instructions de programme.

Dans chaque cas, le produit programme d'ordinateur 12 comprend des instructions qui peuvent être chargées dans l'unité de traitement de données 20 et adaptées pour provoquer l'exécution du procédé d'analyse lorsqu'elles sont exécutées par l'unité de traitement de données 20. Selon les modes de réalisation, l'exécution est entièrement ou partiellement réalisée soit sur le système 10, c'est-à-dire un ordinateur unique, soit dans un système distribué entre plusieurs ordinateurs (notamment via l'utilisation de l'informatique en nuage).

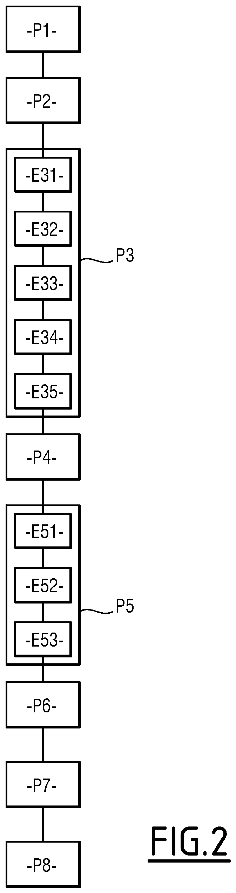

Le fonctionnement du système 10 est maintenant décrit en référence à la figure 2 qui est un ordinogramme illustrant un exemple de mise en oeuvre d'un procédé d'analyse d'images prises par radiographie.

Le procédé d'analyse comporte une phase de réception d'une image P1, une phase de détection du type de l'image P2, une phase de calcul de probabilité de présence d'anomalies P3, une phase de caractérisation anatomique des anomalies P4, une phase de détermination de mesures P5, une phase de détermination de la qualité de prise d'images P6, une phase d'affichage P7 et une phase de constitution de rapport P8.

Le procédé d'analyse illustré comporte ainsi une pluralité de phases détaillées dans ce qui suit.

Selon les besoins, la mise en œuvre du procédé d'analyse comporte la mise en œuvre d'une ou plusieurs phases. Par exemple, seule la phase de détermination de mesures P5 est mise en œuvre.

Lors de la phase de réception P1, il est reçu une pluralité d'images correspondant à des clichés du même patient. Ces images sont à analyser.

Les images sont des images prises par radiographie conventionnelle, c'est-à-dire par détection de rayons X ayant traversés le corps d'un patient sur une image en deux dimensions.

Dans ce qui suit, le procédé est illustré pour une seule image, le même traitement étant appliqué pour chaque image.

Selon une variante, le traitement proposé est appliqué pour plusieurs images de manière à améliorer le diagnostic.

Lors de la phase de détection P2, il est déterminé des informations relatives au type de l'image.

La région imagée ou l'incidence de l'image sont deux exemples de telles informations relatives au type de l'image.

Généralement, la région imagée est dénommée par la partie du corps du sujet qui est imagée. Par exemple, la région imagée est un pied, un bassin, une hanche, un poignet, un rachis ou les côtes.

L'incidence correspond à l'orientation de la région anatomique imagée par rapport à un plan de référence, en particulier le plan coronal aussi appelé plan frontal.

Par exemple, la région du pied peut être imagée avec une incidence de face, de profil ou de ¾. L'ensemble de ces incidences et leurs dénominations correspond à une classification validée et utilisée par l'ensemble des acteurs de la radiologie mondiale. La phase de détection P2 est mise en œuvre par utilisation d'une technique de classification d'images.

Par exemple, il est utilisé un réseau de neurones à convolution ou réseau de neurones convolutif, c'est-à-dire un réseau de neurones comportant au moins une couche implémentant une opération de convolution, par exemple 5 couches de ce type.

Un tel réseau de neurones est souvent désigné sous l'acronyme CNN qui renvoie à la dénomination anglaise de « Convolutional Neural Networks ».

Le réseau de neurones est entraîné à l'aide d'un jeu d'entraînement annoté manuellement par un superviseur.

A l'issue de la mise en œuvre de la phase de détermination, il est déterminé des informations relatives au type de l'image qui sont en l'occurrence la région imagée et l'incidence de l'image.

La phase de calcul de probabilité de présence d'anomalies P3 comporte une étape d'application d'une première technique (dite première étape d'application E31), une étape d'application d'une deuxième technique (dite deuxième étape d'application E32), une étape d'application d'une troisième technique (dite troisième étape d'application E33) et deux étapes d'agrégation E34 et E35.

Lors de la première étape d'application, il est appliqué une première technique de traitement T1 sur l'image.

La première technique de traitement T1 comporte l'application de trois réseaux de neurones successifs : un premier réseau de neurones R1^{T1}, un deuxième réseau de neurones R2^{T1} et un troisième réseau de neurones R3^{T1}.

Chacun des trois réseaux de neurones R1^{T1}, R2^{T1} et R3^{T1} sont des réseaux de neurones convolutifs. De tels neurones sont également qualifiés de réseau de neurones à convolution et parfois désignés sous l'abréviation CNN qui renvoie à la dénomination anglaise correspondante de « Convolutional Neural Networks ».

Les trois réseaux de neurones R1^{T1}, R2^{T1} et R3^{T1} ont fait l'objet d'un apprentissage supervisé.

Pour chaque apprentissage, pour synthétiser des bases de tests présentant un nombre d'image permettant une bonne qualité d'apprentissage, il est généré des cas de tests à partir d'une seule image annotée.

Par exemple, des sous-images sont extraites à partir de l'image fournie de manière aléatoire.

Pour chaque sous-image, il est calculé l'intersection avec un ensemble de pixels correspondant à une caractérisation, par exemple une pathologie.

Lorsque l'intersection est supérieure ou égale à un seuil prédéfini, la caractérisation de l'ensemble de pixels est attribuée à la sous-image.

Le seuil prédéfini est, par exemple, fixé à 30%.

Une même image peut ainsi générer un nombre important d'échantillons permettant de mettre en oeuvre l'apprentissage supervisé des réseaux de neurones R1^{T1}, R2^{T1} et R3^{T1}.

Par ailleurs, lors de l'apprentissage, il est utilisé une technique de label en arborescence.

Cela permet de faciliter l'apprentissage en identifiant successivement les caractéristiques selon une hiérarchie des prédictions.

A titre d'exemple particulier, l'emploi de la hiérarchie de prévision permet de faciliter l'apprentissage des caractéristiques d'une fracture du genou droit en la décomposant en fracture et fracture du genou droit sachant fracture. Ici 'fracture du genou droit sachant fracture' revient essentiellement à savoir localiser la fracture qui est une tâche plus simple (plus facile à apprendre avec moins de données) que de déterminer si c'est une fracture ainsi que sa localisation.

Le premier réseau de neurone R1^{T1} associe à l'image des informations caractéristiques.

La texture, le contour, l'intensité des pixels, la distribution de l'intensité ou les lignes de force sont des exemples d'informations caractéristiques.

Le deuxième réseau de neurones R2^{T1} permet d'obtenir à partir des informations caractéristiques la présence ou non d'une pathologie.

Selon l'exemple décrit, les pathologies sont au nombre de sept.

Les pathologies sont la luxation, l'épanchement pleural, la fracture, l'épanchement articulaire du coude, le nodule pulmonaire, l'opacité pulmonaire et le pneumothorax.

Le troisième réseau de neurones R3^{T1} est mis en oeuvre uniquement si le deuxième réseau de neurones R2 trouve qu'une pathologie est présente.

Le troisième réseau de neurones R3^{T1} permet d'obtenir à partir des informations caractéristiques le contour précis de chaque pathologie.

Pour obtenir un résultat satisfaisant avec un temps de calcul compatible avec les exigences matérielles, le troisième réseau de neurones R3^{T1} a été appris sur des portions d'images du jeu d'entraînement puis reconstruit par interpolation des différents modèles locaux.

A l'issue de la première étape d'application, il est ainsi obtenu un contour encadrant la zone concernée par une pathologie. D'un point de vue informatique, la sortie de la première étape d'application est la limite d'un ensemble de pixels ainsi qu'un label, le label étant la pathologie.

Lors de la deuxième étape d'application, il est appliqué une deuxième technique de traitement T2 sur l'image.

La deuxième technique de traitement T2 comporte l'application de trois réseaux de neurones successifs : un premier réseau de neurones R1^{T2}, un deuxième réseau de neurones R2^{T2} et un troisième réseau de neurones R3^{T2}.

Chacun des trois réseaux de neurones R1^{T2}, R2^{T2} et R3^{T2} sont des réseaux de neurones convolutifs.

Les trois réseaux de neurones R1^{T2}, R2^{T2} et R3^{T2} ont fait l'objet d'un apprentissage supervisé. En particulier, les trois réseaux sont entraînés conjointement de façon supervisée. Le premier réseau de neurones R1^{T2} de la deuxième étape d'application est similaire au premier réseau de neurones R1^{T1} de la première étape d'application au sens où ils effectuent une classification.

L'utilisation du premier réseau de neurones R1^{T2} permet d'obtenir des informations caractéristiques.

Le deuxième réseau de neurones R2^{T2} est appliqué sur les informations caractéristiques et permet de déterminer si l'image entière comporte une pathologie.

Le deuxième réseau de neurones R2^{T2} est donc un modèle de classification.

Toutefois, le premier réseau de neurones R1^{T1} de la première étape d'application est appliqué sur des groupes de pixels sur l'image alors que le premier réseau de neurones R1^{T2} de la deuxième étape d'application est appliqué sur l'image en entier.

En présence d'une pathologie, le troisième réseau de neurones R3^{T2} extrait du deuxième réseau de neurones R2^{T2} les pixels ayant entraîné la détection de la présence d'une pathologie. De tels pixels sont dits pixels caractéristiques.

Les pixels caractéristiques sont déterminés pour chacune des pathologies détectées.

Autrement formulé, il est obtenu une carte d'intensité associant à chaque pixel la probabilité qu'une pathologie soit détectée.

Une telle cartographie peut être représentée sous forme d'un code couleur, allant, par exemple, d'une couleur bleu (probabilité faible) à une couleur rouge (probabilité élevée).

Ainsi, une telle localisation peut être affichée en attribuant une couleur différente à chaque pixel caractéristique d'une pathologie.

Lorsqu'un pixel est caractéristique de deux pathologies (ou plus). Lors de l'affichage, chaque carte d'intensité est affichée de manière indépendante: l'utilisateur sélectionne la pathologie à afficher, affichant ainsi la carte d'intensité. Deux cartes d'intensité ne peuvent pas être affichées en même temps.

Lors de la troisième étape d'application, il est appliqué une troisième technique de traitement T3 sur l'image.

La troisième technique de traitement T3 comporte l'application de deux réseaux de neurones successifs : un premier réseau de neurones R1^{T3} et un deuxième réseau de neurones R2^{T2}.

Chacun des deux réseaux de neurones R1^{T3} et R2^{T3} sont des réseaux de neurones convolutifs.

Les deux réseaux de neurones R1^{T3} et R2^{T3} ont fait l'objet d'un apprentissage supervisé. Selon l'exemple décrit, les deux réseaux sont entraînés conjointement de façon supervisée.

Le premier réseau de neurones R1^{T3} de la troisième étape d'application est similaire au premier réseau de neurones R1^{T1} de la première étape d'application. Ces deux premiers réseaux de neurones R1^{T3} et R1^{T1} sont similaires mais non identiques, l'architecture du réseau n'est pas la même. Le fonctionnement est similaire: associe à l'image des informations caractéristiques, les sorties ne sont pas totalement identiques (les informations caractéristiques issues du réseau de neurones ne sont pas les mêmes).

L'utilisation du premier réseau de neurones R1^{T3} permet d'obtenir des informations caractéristiques.

Le deuxième réseau de neurones R2^{T2} est appliqué sur chaque pixel de l'image et utilise les informations caractéristiques pour déterminer, pour chaque pixel de l'image, un score.

Le score est représentatif de la probabilité de présence d'une pathologie.

Selon l'exemple proposé, le score est compris entre 0 et 1. 0 correspond à une probabilité très faible que la pathologie soit présente dans l'image, 1 correspond à une probabilité très élevée.

Le deuxième réseau de neurones R2^{T3} est un algorithme de segmentation opérant sur plusieurs classes.

Lors de la première étape d'agrégation, l'ensemble des prédictions obtenues à l'issue de chacune des étapes d'application de chacune des trois techniques est utilisé pour obtenir un score unique par image via une technique d'agrégation.

Ainsi, la première étape d'agrégation permet de passer à un score par pixel à un score par image.

La technique d'agrégation utilise des outils de conversion.

Un premier outil de conversion est un outil de conversion permettant de transformer une cartographie de probabilités en un contour de pixel labellisé.

Pour cela, le premier outil de conversion utilise une comparaison avec un seuil dont le résultat est soit 0 soit 1 selon la valeur du pixel par rapport audit seuil. Par exemple, si la valeur du pixel est inférieure au seuil, c'est un « 0 » et un « 1 » sinon.

Autrement formulé, le premier outil de conversion effectue une binarisation de l'image.

Après binarisation de l'image, des ensembles connexes de valeur 1 sont découpés.

Pour chaque ensemble, il est déterminé la valeur de la moyenne et le maximum des probabilités de l'ensemble.

Selon l'exemple décrit, la moyenne est une moyenne arithmétique.

Lorsque le maximum est supérieur à deux fois la moyenne, l'ensemble est supprimé.

Par ailleurs, est également supprimé tout ensemble inclus dans un ensemble plus grand.

Le ou les ensembles obtenus à la fin correspondent au(x) contour(s) de pixel(s) labellisé(s).

Le deuxième outil de conversion assure la conversion contraire. Chaque pixel est mis à la valeur 1 lorsque le pixel est contenu dans au moins un contour. Une fonction de lissage de type flou gaussien est ensuite appliquée.

A l'issue de la première étape d'agrégation pour obtenir un score par pathologie et par image, il est obtenu en sortie, en plus du score, les sorties des algorithmes à savoir la région anatomique, l'incidence, la localisation des anomalies sous forme de cartographie et de contours, et ce pour chacune des sept pathologies.

Pour obtenir un score global pour l'examen d'un seul patient (qui, comme indiqué précédemment, peut contenir plusieurs images), une deuxième étape d'agrégation est mise en oeuvre.

La deuxième étape d'agrégation prend en entrée l'ensemble des sorties précédemment décrites par images et par pathologies et les agrège en un score global pour l'examen, indice de normalité ou de pathologie.

La technique d'agrégation utilise des outils de conversion.

Un premier outil de conversion est un outil de conversion permettant de transformer les scores par pathologie de chaque image d'un même examen en d'autres scores dit « modifiés » par pathologie en fonction de la région anatomique et de l'incidence de l'image concernée.

L'outil de conversion utilise une table de conversion déterminée par un réseau de neurone non convolutionnel entrainé à cet effet, de façon supervisée.

Un second outil de conversion permet d'agréger les scores « modifiés » par pathologie et par image pour un examen donné, en un score global pour l'examen. Cela peut être par exemple la recherche du plus grand score « modifié » ou bien la moyenne des scores « modifiés ».

Le score global est ensuite catégorisé selon une répartition en trois valeurs : normale, anormale et doute.

Un seuil de précision est fixé à 95%. Cela correspond au seuil de confiance fixé pour une Valeur Prédictive Positive (souvent désignée par l'abréviation VPP) et pour une Valeur Prédictive Négative (souvent désignée par l'abréviation VPN).

A l'issue de la phase de calcul P3, il est ainsi obtenu une nature des zones selon trois catégories : normale, présence d'une ou plusieurs anomalies et zone présentant un doute.

Il est supposé pour ce qui suit qu'à l'issue de la phase de calcul P3 qu'une ou plusieurs anomalies ont été détectées.

Une phase de caractérisation anatomique des anomalies P4 est ensuite menée.

En cas de détection d'une pathologie, la pathologie est plus précisément décrite d'un point de vue anatomique grâce à sa concordance avec un algorithme de segmentation anatomique qui permet d'identifier pour chaque pixel l'appartenance à telle ou telle région anatomique.

Par exemple, si une fracture est détectée sur un image de main de face, et que les pixels correspondants à la fracture correspondent à plus de 60% avec des pixels localisés sur la région anatomique de l'extrémité inférieure du radius, alors le rapport mentionne que la fracture appartient à l'extrémité inférieure du radius.

La phase de détermination de mesures P5 est ensuite mise en œuvre.

Par mesures dans ce contexte, il peut être cité un bilan d'hallux valgus, de la coxométrie ou de la gonométrie.

Pour les mesures qui suivent, les définitions sont présentes dans le livre intitulé *« Repères et mesures utiles en imagerie ostéo-articulaire* » de Géraldine Serra-Tosio et le livre « *Imagerie muscosquelettique* » du professeur Anne Cotten.

Plus précisément, dans le cas d'une hanche vue de face ou de profil, il est mesuré au moins une des mesures parmi les suivantes ; l'angle VCE, l'angle HTE, l'angle VCA, la longueur des membres inférieurs et la différence de longueurs ente les membres inférieurs.

Pour le cas d'un pied de face ou de profil, la phase de mesures peut donner accès aux mesures suivantes : M1-P1, P1-P2, M1-M5, M1-M5, angle de Bohler, angle de Djian-Annonier, ligne de Méary-Toméno et pente du calcanéus.

Pour l'exemple des genoux vus de profil, il est intéressant de déterminer la hauteur rotulienne.

En présence d'un pangonogramme, il est intéressant d'avoir accès aux mesures suivantes : angle fémoro-tibial, angle mécanique fémoral et angle mécanique tibial.

Pour un rachis cervical, la phase de détermination de mesures P5 utilisera au moins un des éléments géométriques remarquables parmi l'angulation cervicale, l'épaisseur des parties molles pré-cervicales ou la ligne cervicale postérieure.

Enfin, pour une image de poignet, au moins une des mesures suivantes peut être considérée : angle radio-lunaire, angle scapho-lunaire ou distance scapho-lunaire.

La phase de détermination des mesures P5 comporte trois étapes : une étape de détourage E51, une étape de localisation d'éléments géométriques remarquables E52 et une étape de mesure E53.

Lors de l'étape de détourage, il est détecté une ou plusieurs zone(s) d'intérêt sur l'image traitée.

Selon l'exemple proposé, l'étape de détourage consiste à recevoir les données issues de la phase de détection P2.

En variante, une autre phase de détection est mise en œuvre. Dans un tel cas, il peut être utilisé tout type d'algorithme permettant d'identifier la zone imagée et l'incidence.

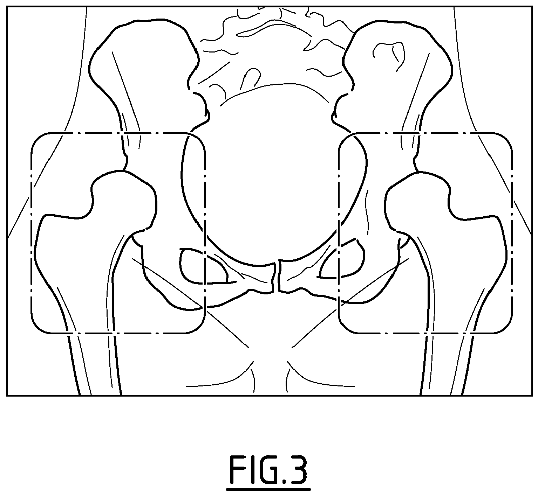

Un exemple de zones détectées est montré sur la figure 3 dans lequel les zones correspondant aux hanches sont délimitées par des traits pointillés.

Plus précisément, selon l'exemple particulier d'un bassin vu de face, l'image est découpée en deux zones, une première zone correspondant à la hanche gauche et une deuxième zone correspondant à la hanche droite.

Il est ensuite mis en œuvre l'étape de localisation selon deux techniques distinctes.

Par éléments géométriques dans ce contexte, il est entendu soit des points soit des droites/segments. Les éléments géométriques considérés comme remarquables sont usuellement fixés par les définitions radiologiques.

Un élément géométrique est ainsi un élément géométrique prédéfini, notamment par un opérateur.

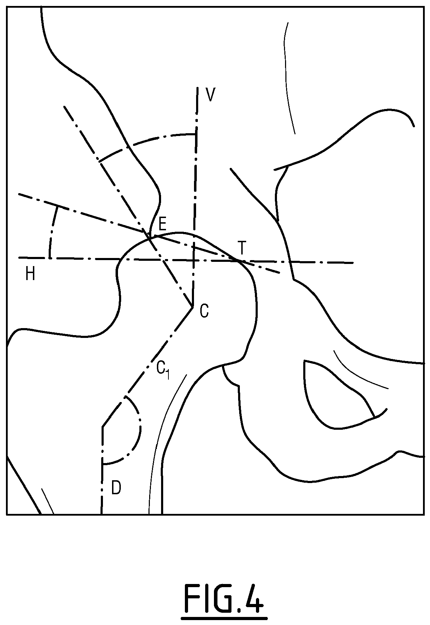

Dans le cas d'une hanche, les éléments géométriques remarquables sont visibles sur la figure 4. Il est en particulier à noter qu'il y a 5 points à déterminer pour la hanche de face.

Selon une première technique, il est déterminé les points puis les segments.

La détection de points caractéristiques est mise en œuvre à l'aide d'un réseau de neurones qui extrait des caractéristiques pour chaque pixel.

Pour chaque point à détecter, il est déterminé partir de la carte de caractéristiques une carte de probabilités par point recherché, donnant pour chaque pixel de l'image la probabilité que celui-ci soit le point recherché.

Le point remarquable recherché est déterminé comme étant le pixel présentant la probabilité la plus grande.

Pour cela, le réseau de neurones est entraîné de manière supervisée.

Une fois l'ensemble des points déterminés, les segments sont obtenus en reliant les points remarquables déterminées.

Selon une deuxième technique, il est déterminé les droites puis les points.

Il est construit un grillage (souvent désigné sous la dénomination de « meshgrid »). Le grillage est formé de deux matrices dont chaque élément a pour valeur sa position en x et y, respectivement, et normalisée entre -1 et 1.

Un tel grillage est ensuite concaténé à l'image en cours de traitement, pour former une nouvelle image de la même dimension.

Un réseau de neurones apte à prédire la droite considérée est appliqué sur la nouvelle image.

Un tel réseau de neurones a été entraîné de manière supervisée, en minimisant l'erreur des moindres carrés avec les coefficients de la droite (qui sont au nombre de trois).

Il est ainsi obtenu des droites remarquables dont l'intersection correspond aux points remarquables recherchés.

Dans l'exemple proposé, il est utilisé les deux techniques pour obtenir les points et les segments, par exemple, à l'aide d'une agrégation de type moyenne. Typiquement, le point remarquable sera le point situé au milieu des points déterminés par les deux techniques. Point par point, il est également possible de déterminer le segment milieu des deux segments déterminés par les deux techniques.

Alternativement, une seule des deux techniques précitées est mise en œuvre.

A l'issue de l'étape de localisation, l'ensemble des éléments géométriques remarquables a ainsi été localisé.

L'étape de mesure est mise en œuvre à partir de la localisation des éléments géométriques remarquables.

Par exemple, l'étape de mesure applique des calculs de trigonométrie pour trouver les angles recherchés.

A l'issue de la phase de détermination de mesures P5, il est ainsi obtenu des segments mesurés sur l'image ainsi que les mesures associées.

Lors de la phase de détermination de la qualité P6, il est évalué la qualité de l'image.

La phase de détermination de la qualité P6 vise à détecter si l'image présente un ou plusieurs défauts de prise de vue.

Pour cela, il est appliqué un réseau de neurones sur l'image.

Le réseau de neurones a été entraîné de façon supervisé.

Selon l'exemple proposé, le réseau de neurones est un classifieur propre à classifier selon plusieurs classes.

Dans le cas décrit, le nombre de classes est égale à 4, à savoir défaut de technique, défaut de centrage, défaut d'orientation et défaut de machine.

Le défaut de technique est, par exemple, un défaut lié à la saturation, la luminosité ou le contraste de l'image. A titre d'exemple, l'image est trop "blanche", ce qui ne permet pas au radiologue de visualiser correctement les os ou autres parties "claires" dans l'image.

Un autre défaut de technique est un défaut lié au mouvement comme la présence de flou cinétique du fait des mouvements de la personne.

A titre d'illustration, un défaut de centrage est présent lorsque la région à analyser est mal centrée, lorsqu'une partie de la zone est manquante car hors du cadre ou lorsque des objets externes en projection gênent l'interprétation.

Le défaut d'orientation vise des cas où la radiographie n'est pas "droite" mais "penchée", ce qui peut gêner le radiologue lors de son diagnostic. Un autre défaut d'orientation correspond au cas où l'angle de vue n'est pas bon: par exemple le profil pas de profil strict, ou la face pas de face stricte.

Le défaut de machine est, par exemple, un artéfact présent du fait d'un mauvais fonctionnement du capteur d'images à rayons X.

Lors de la phase d'affichage, des indications visuelles sont superposées à l'affichage de l'image.

Une mise en relief d'une zone particulière est un exemple d'indication visuelle.

Par exemple, un rectangle entourant la zone particulière de l'image est affiché.

Un autre exemple d'indication visuelle est une cartographie divisée en zones de couleurs différentes.

Une telle cartographie permet de coder via la couleur de la zone une grandeur particulière.

Par exemple, la grandeur est un angle mesuré lors de la phase de détermination de mesures P5.

L'étape d'affichage permet ainsi d'afficher des images augmentées avec des indications visuelles d'intérêt.

De préférence, comme dans le cas d'un tel procédé, l'image affichée lors de la phase d'affichage P7 est choisie en fonction des informations calculées.

Par exemple, entre une image pour laquelle la catégorie est douteuse et une image pour laquelle la catégorie est normale, l'image correspondant à la catégorie douteuse est à afficher en premier.

De même, entre une image la catégorie est anormale et une image pour laquelle la catégorie est normale, l'image correspondant à la catégorie anormale est à afficher en premier.

Plus généralement, l'utilisateur du procédé est adapté à trier ou à filtrer les images selon des catégories paramétrables.

Lors de la phase de constitution d'un rapport P8, il est obtenu un rapport par report des informations utilisées et calculées.

En particulier, le rapport contient la ou les région(s) anatomique(s), la ou les incidence(s) de prise de vue, l'indication médicale (douleurs ou traumatisme par exemple) ou des informations d'identification du patient, tel son âge ou son sexe.

Le rapport contient également les résultats des détections précédemment décrites lors de la phase de caractérisation anatomique des anomalies P4.

Le procédé d'analyse permet ainsi d'analyser de manière automatique une ou plusieurs images.

Un tel procédé d'analyse correspond ainsi à un procédé de post-traitement d'au moins une image permettant de faciliter le travail d'un radiologue.

Grâce aux informations déterminées, le procédé permet d'établir une boucle de communication en temps réel avec le radiologue pour déterminer les tâches à effectuer en priorité. Cela permet une meilleure utilisation de l'expertise du radiologue.

Le procédé d'analyse d'images prises par radiographie est aussi plus fiable parce qu'il fait appel à plusieurs techniques distinctes, ce qui limite le risque d'erreurs.

Selon les modes de réalisation, le procédé d'analyse précédemment décrit est mise en œuvre de différentes manières, notamment en utilisant un composant, un logiciel ou une combinaison des deux. En particulier, chaque étape/phase est mise en œuvre par un module adapté pour mettre en œuvre l'étape ou des instructions logicielles adaptée pour entraîner l'exécution de l'étape par interaction avec le système 10 ou un appareil spécifique comportant le système 10.

Il est également à noter que deux étapes ou deux phases successives peuvent, en fait, être mises en œuvre simultanément ou dans un ordre inverse selon les modes de réalisation considérés.

## Revendications

1. Procédé d'analyse d'images prises par radiographie d'une partie d'un sujet comportant au moins une zone à étudier avec des os, le procédé étant mis en œuvre par ordinateur et comportant une étape de :
- détection de l'au moins une zone à étudier ainsi que de l'incidence avec laquelle les images sont prises par radiographie,
- localisation d'éléments géométriques remarquables de l'au moins une zone à étudier par mise en œuvre d'au moins une technique parmi une première technique et une deuxième technique,
la première technique impliquant la détermination de la position de points remarquables par application d'un réseau de neurones puis la détermination de segments remarquables comme reliant les points déterminés,
la deuxième technique impliquant la détermination de droites remarquables par application d'un réseau de neurones puis la détermination des points remarquables comme intersection de droites remarquables déterminées, et
- mesure d'au moins un angle entre deux os de l'au moins une zone à étudier à partir d'éléments géométriques remarquables localisés.

2. Procédé selon la revendication 1, dans lequel, lors de l'étape de localisation d'éléments géométriques remarquables, les deux techniques sont mises en œuvre pour obtenir deux résultats, l'étape de localisation comportant, en outre, une étape d'agrégation des résultats obtenus par les deux techniques, notamment par moyennage, pour obtenir une localisation de chacun des éléments géométriques remarquables.

3. Procédé selon la revendication 1 ou 2, dans lequel l'étape de détection est mise en œuvre par application d'un réseau de neurones convolutionnel.

4. Procédé selon l'une quelconque des revendications 1 à 3, dans lequel les images sont découpées en ensemble de pixels, le procédé comportant, en outre, une détection de la probabilité de la présence d'une anomalie pour classer chaque ensemble de pixels selon trois catégories : présence d'une pathologie, doute sur la présence d'une pathologie et absence de pathologie.

5. Procédé selon la revendication 4, dans lequel l'étape de détection de probabilité met en œuvre plusieurs techniques de calcul distinctes impliquant chacune l'emploi d'un réseau de neurones respectif puis d'au moins une étape d'agrégation des résultats obtenus par mise en œuvre des techniques de calcul.

6. Procédé selon l'une quelconque des revendications 1 à 5, dans lequel le procédé comporte, en outre, une étape de détermination de la qualité de la prise des images par utilisation d'un classifieur.

7. Procédé selon l'une quelconque des revendications 1 à 6, dans lequel le procédé comporte, en outre, une étape de constitution d'un rapport, le rapport comportant la valeur du ou des angles mesuré(s) sur les images.

8. Procédé selon l'une quelconque des revendications 1 à 7, dans lequel le procédé comporte, en outre, une étape d'affichage de la valeur du ou des angles mesuré(s) sur les images.

9. Produit programme d'ordinateur comportant un support lisible d'informations (32), sur lequel est mémorisé un programme d'ordinateur comprenant des instructions de programme, le programme d'ordinateur étant chargeable sur une unité de traitement de données (20) et adapté pour entraîner la mise en œuvre d'au moins une étape d'un procédé selon l'une quelconque des revendications 1 à 8 lorsque le programme d'ordinateur est mis en œuvre sur l'unité de traitement des données (20).

10. Support lisible d'informations (32) comportant des instructions de programme formant un programme d'ordinateur, le programme d'ordinateur étant chargeable sur une unité de traitement de données (20) et adapté pour entraîner la mise en œuvre d'au moins une étape d'un procédé selon l'une quelconque des revendications 1 à 8 lorsque le programme d'ordinateur est mis en œuvre sur l'unité de traitement de données (20).
